# EUROPÄISCHE PATENTANMELDUNG

(11) **EP 4 786 080 A1**
(43) Veröffentlichungstag der Anmeldung: **05.08.2026**
(21) Anmeldenummer: 25155239.4
(22) Anmeldetag: 31.01.2025
(51) Int. Cl.: B23B 27/10, B23B 29/04

(54) **WERKZEUGKOPF FÜR EIN STECHWERKZEUG UND/ODER EIN DREHWERKZEUG**

(71) Anmelder: CERATIZIT Austria Gesellschaft m.b.H., 6600 Reutte (AT)
(72) Erfinder: VENTURINI, Remus, 6600 Reutte (AT); PRAST, Josef, 6600 Reutte (AT)
(74) Vertreter: Ciesla, Dirk

(57) **Zusammenfassung**

Werkzeugkopf (1, 100, 200, 300, 400) für ein Stechwerkzeug und/oder ein Drehwerkzeug, aufweisend einen Schneidhalterteil (3), eine Kühlmittelkanalstruktur (9) mit einem dem Schneidhalterteil (3) zugeordneten Kühlmittelauslass (12, 36), eine Kupplungsfläche (13) und ein von der Kupplungsfläche (13) entlang einer zentralen Rohrlängsachse (5) abstehendes Rohrelement (6) zum Kühlmitteleinlass in die Kühlmittelkanalstruktur (9), wobei die Kupplungsfläche (13) eine Rippenstruktur (14, 30, 38) aufweist, die zumindest beidseits des Rohrelements (6) ein rohraxial bemessenes und insgesamt maximales Rippenhöhenniveau (19) der Rippenstruktur (14, 30, 38) definiert und sich ausgehend hiervon in Richtung auf das Rohrelement (6) oder auf eine Querachse (31) des Rohrelements (6) erstreckt und dabei durchgehend unter das maximale Rippenhöhenniveau (19) eingesenkt ausgebildet ist.

## Beschreibung

Die vorliegende Erfindung betrifft einen Werkzeugkopf für ein Stechwerkzeug und/oder ein Drehwerkzeug und Herstellverfahren zur Herstellung eines Werkzeugkopfs für ein Stechwerkzeug und/oder ein Drehwerkzeug.

EP 1 722 973 A1 zeigt ein Stechwerkzeug. Das aus der EP 1 722 973 A1 bekannte Stechwerkzeug umfasst ein Kupplungsteil, das lösbar mit einem Werkzeugkopf verbindbar ist. Das aus der EP 1 722 973 A1 bekannte Kupplungsteil weist eine erste Verzahnungsfläche und der Werkzeugkopf eine zweite Verzahnungsfläche auf. Wenn diese Flächen miteinander in Eingriff gebracht werden, bilden sie eine Schnittstelle zwischen diesen Teilen, die dann durch drei Schrauben miteinander verbunden werden. Der aus der EP 1 722 973 A1 bekannte Werkzeugkopf weist ein Rohrteil auf, das als Kühlmitteleinlass in den Werkzeugkopf dient. Der Werkzeugkopf weist einen mit dem Kühlmitteleinlass fluidkommunizierend verbundenen Kühlmittelauslass auf.

Bei dem aus der EP 1 722 973 A1 bekannten Werkzeugkopf besteht das Problem, dass die zweite Verzahnungsfläche häufig auf der Seite des Rohrteils ballig ist, also konvex nach außen gewölbt ist. Der Werkzeugkopf verkippt also sehr leicht beim Anziehen der erwähnten Schrauben, sodass die erwähnte Schnittstelle verkippt fixiert wird. Der Werkzeugkopf ist demzufolge beim Stechen häufig nicht so präzise ausgerichtet, wie dies für die Bearbeitung von räumlich schwer zugänglichen Bauteilbereichen erforderlich ist.

Die erwähnte Balligkeit der zweiten Verzahnungsfläche entsteht üblicherweise dadurch, dass diese durch Schleifen und/oder Fräsen auf ein gleiches Höhenniveau gebracht werden soll, insbesondere wenn das Rohrteil bereits vor dem Erzeugen der Verzahnungsfläche des Werkzeugkopfs montiert oder im Bereich der Verzahnungsfläche gebildet ist. Denn dann steht es dem entsprechenden Schleifwerkzeug beziehungsweise Fräswerkzeug im Weg, sodass dieses nicht mehr in einem Arbeitsgang, sprich zum Beispiel von rechts nach links, die Rippenstruktur erzeugen kann, sondern mehrfach abgesetzt und wieder angesetzt werden muss, um eine Kollision mit dem Rohrteil zu vermeiden.

Die Aufgabe der vorliegenden Erfindung besteht darin, einen präziser kuppelbaren und zugleich einfacher herstellbaren Werkzeugkopf für ein Stechwerkzeug und/oder Drehwerkzeug sowie ein bezüglich seiner Kuppelbarkeit präziseres und zugleich einfacheres Herstellverfahren für einen Werkzeugkopf für ein Stechwerkzeug und/oder ein Drehwerkzeug bereitzustellen.

Die Aufgabe der vorliegenden Erfindung wird gelöst durch den Gegenstand von Anspruch 1. Vorteilhafte Weiterbildungen der Erfindung sind den abhängigen Ansprüchen zu entnehmen, die untereinander frei kombinierbar sind.

Der Werkzeugkopf für ein Stechwerkzeug und/oder ein Drehwerkzeug weist einen Schneidhalterteil, eine Kühlmittelkanalstruktur mit einem dem Schneidhalterteil zugeordneten Kühlmittelauslass, eine Kupplungsfläche und ein von der Kupplungsfläche entlang einer zentralen Rohrlängsachse abstehendes Rohrelement zum Kühlmitteleinlass in die Kühlmittelkanalstruktur auf, wobei die Kupplungsfläche eine Rippenstruktur aufweist, die zumindest beidseits des Rohrelements ein rohraxial bemessenes und insgesamt maximales Rippenhöhenniveau der Rippenstruktur definiert und sich ausgehend hiervon in Richtung auf das Rohrelement oder auf eine Querachse des Rohrelements erstreckt und dabei durchgehend unter das maximale Rippenhöhenniveau eingesenkt ausgebildet ist.

Üblicherweise ist die Rippenstruktur größtenteils so eingesenkt ausgebildet, dass, je nach dem strukturellen Aufbau der Rippen, die meisten Rippen und/oder die meisten Rippenanteile unterhalb des maximalen Rippenhöhenniveaus verlaufen. Die Rippenstruktur ist zumindest beidseits des Rohrelements ausgebildet. Denkbar und auch möglich ist es, dass die Rippenstruktur auf einer dementsprechenden dritten oder weiteren Seite des Rohrelements ausgebildet ist, sodass das Rohrelement zumindest abschnittsweise umfänglich umgeben ist.

Die Rippenstruktur weist zumindest beidseits des Rohrelements mehrere Rippen auf, zwischen denen folglich das Rohrelement angeordnet ist. Die Rippenstruktur auf beiden Seiten des Rohrelements definiert das maximale Rippenhöhenniveau, welches üblicherweise zugleich das insgesamt maximale rohraxial bemessene Flächenhöhenniveau der Kupplungsfläche außerhalb des Rohrelements ist. Denkbar und auch möglich ist es, dass die Rippenstruktur, wenn sie auf drei oder mehreren Seiten des Rohrelements ausgebildet ist, auf jeder dieser Seiten das insgesamt maximale Rippenhöhenniveau definiert. Die Rippenstruktur ist durch mehrere Rippen gebildet, wobei die Rippen jeweils einen linienförmigen oder flächenförmigen Rippengrat aufweisen. Ein Beispiel für einen flächenförmigen Rippengrat wäre einer, der in Aufsicht in Blickrichtung entlang der zentralen Rohrlängsachse rechteckig oder dreieckig ausgebildet ist.

Dort, wo die Rippenstruktur das maximale Rippenhöhenniveau definiert, tangiert sie folglich eine senkrecht zur zentralen Rohrlängsachse angeordnete Höhenebene, üblicherweise durch und entlang jeweils einer Außenrippe und/oder durch und entlang von mehreren Rippenenden, die folglich die Höhenebene tangieren. Die Rippenstruktur erstreckt sich ausgehend hiervon, also wo sie das maximale Rippenhöhenniveau zumindest beidseits des Rohrelements definiert, in Richtung auf das Rohrelement oder auf eine Querachse zum Rohrelement und ist dabei durchgehend unter das maximale Rippenhöhenniveau eingesenkt ausgebildet. Sie ist also entlang der zentralen Rohrlängsachse zwischen dort, wo sie zumindest beidseits das maximale Rippenhöhenniveau definiert, und dort, wo sie aufseiten des Rohrelements endet, durchgehend eingesenkt ausgebildet, sodass sie dazwischen an einer beliebigen Stelle unterhalb des maximalen Rippenhöhenniveaus verläuft.

Wenn sich die Rippenstruktur in Richtung auf die Querachse des Rohrelements erstreckt und dabei durchgehend unter das maximale Rippenhöhenniveau eingesenkt ausgebildet ist, hat die Rippenstruktur insoweit eine rillenförmige Grundform. Wenn sich die Rippenstruktur in Richtung auf das Rohrelement erstreckt und dabei durchgehend unter das maximale Rippenhöhenniveau eingesenkt ausgebildet ist, hat die Rippenstruktur insoweit eine trichterförmige Grundform. Dort, wo die Rippenstruktur das maximale Rippenhöhenniveau definiert, ist die Kupplungsfläche in rohraxialer Richtung zur rohraxialen Abstützung der Kupplungsfläche zumindest beidseits des Rohrelements ausgebildet.

Indem sich die Rippenstruktur ausgehend hiervon in Richtung auf das Rohrelement oder auf die Querachse des Rohrelements erstreckt und dabei durchgehend unter das maximale Rippenhöhenniveau eingesenkt ausgebildet ist, wird zwischen und innerhalb der Seiten, wo sie zumindest beidseits das maximale Rippenhöhenniveau definiert und damit zur rohraxialen Abstützung der Kupplungsfläche zumindest beidseits des Rohrelements ausgebildet ist, eine ballige Grundform der Rippenstruktur aufseiten des Rohrelements vermieden. Die Rippenstruktur, wo sie so eingesenkt ausgebildet ist, ist für einen seitlichen Rippenflankenkontakt mit einer weiteren und auf einem konstanten Rippenhöhenniveau ausgebildeten Rippenstruktur, zum Beispiel von einem Kupplungsteil, ausgebildet, ohne dabei einen auf einem konstanten Bodenhöhenniveau ausgebildeten Bodenflächenanteil der weiteren Rippenstruktur zu tangieren.

Durch die Rippenstruktur der Kupplungsfläche wird folglich die rohraxiale Abstützfunktion der Kupplungsfläche, also dort, wo die Rippenstruktur das maximale Rippenhöhenniveau zumindest beidseits des Rohrelements definiert, von einer Drehmomentaufnahmefunktion, also dort, wo die Rippenstruktur durchgehend unter das maximale Rippenhöhenniveau eingesenkt ausgebildet ist, räumlich entkoppelt. Der Werkzeugkopf ist damit präziser kuppelbar, weil er bei der Bildung einer Schnittstelle mit dem erwähnten Kupplungsteil und einem Eingriff der Rippenstruktur der Kupplungsfläche mit der weiteren Kupplungsfläche des Kupplungsteils kippstabil mit dieser im Eingriff stehen kann. Die eingesenkte Form der Rippestruktur lässt sich durch eine additive Herstellung besonders einfach ausbilden.

Gemäß einer Weiterbildung ist die Rippenstruktur so eingesenkt ausgebildet, dass sie einem eingesenkten Bodenflächenanteil der Kupplungsfläche folgt. Der Bodenflächenanteil der Kupplungsfläche ist der Anteil der Kupplungsfläche, von welchem sich die Rippenstruktur erhebt. Durch den so eingesenkten Bodenflächenanteil wird auch in diesem Bereich der Kupplungsfläche eine Balligkeit auf der Seite des Rohrelements vermieden. Indem der Bodenflächenanteil entsprechend eingesenkt ausgebildet ist, lässt sich die Kupplungsfläche additiv besonders einfach herstellen.

Gemäß einer Weiterbildung ist die Rippenstruktur beziehungsweise der Bodenflächenanteil unter einem Einsenkungswinkel im Bereich von 0,5° bis 15° eingesenkt ausgebildet, wobei der Einsenkungswinkel in einem parallel zur Rohrlängsachse angeordneten Querschnitt zwischen einer zur Rohrlängsachse senkrechten und unterhalb der Kupplungsfläche angeordneten Bemessungslinie und einer Höhenkonturlinie der Rippenstruktur beziehungsweise des Bodenflächenanteils auf derselben Seite des Rohrelements bemessen wird. Üblicherweise enthält der Querschnitt die zentrale Rohrlängsachse. Bei einem Einsenkungswinkel von 0° würde sich die Rippenstruktur durchgehend auf dem maximalen Rippenhöhenniveau erstrecken. Unter einem Einsenkungswinkel von 0,5° sind die Rippen der Rippenstruktur weniger stark unter das maximale Rippenhöhenniveau eingesenkt ausgebildet als unter einem Einsenkungswinkel von 15°. Im Bereich des Einsenkungswinkels von 0,5° bis 15° sind die Rippen hinreichend "flach", dass sie einen dementsprechend großen seitlichen Rippenflächenkontakt mit der erwähnten weiteren Rippenstruktur des Kupplungsteils bilden können, und zugleich wird eine Balligkeit der Rippenstruktur auf der Seite des Rohrelements weiterhin zuverlässig vermieden.

Die Höhenkonturlinie kann dem Rippengrat einer Rippe im Querschnitt folgen, wenn diese im Querschnitt längs ihrer Längserstreckung angeschnitten ist. Die Höhenkonturlinie verbindet die Hochpunkte der Rippenstruktur im Querschnitt durch lineare Segmente, wenn mehrere Rippen im Querschnitt quer zu ihrer Längserstreckung angeschnitten werden, sodass der Einsenkungswinkel an jedem linearen Segment bezüglich der Bemessungslinie gemessen werden kann. Wenn der Bodenflächenanteil eingesenkt ausgebildet ist, folgt die Rippenstruktur diesem, sodass die Höhenkonturlinie dann dem Bodenflächenanteil im Querschnitt folgt. Die Höhenkonturlinie folgt dem Bodenflächenanteil, wenn dieser im Querschnitt zwischen zwei benachbarten Rippen angeschnitten wird und so als durchgehende Linie im Querschnitt erscheint. Die Höhenkonturlinie verbindet die Hochpunkte des Bodenflächenanteils, die folglich tiefer liegen als die Hochpunkte der Rippenstruktur, im Querschnitt durch lineare Segmente, wenn mehrere Rippen im Querschnitt quer zu ihrer Längserstreckung angeschnitten werden, sodass der Einsenkungswinkel an jedem linearen Segment bezüglich der Bemessungslinie gemessen werden kann. Üblicherweise liegt die zentrale Rohrlängsachse in dem Querschnitt.

Gemäß einer Weiterbildung liegt der Einsenkungswinkel im Bereich von 0,8° bis 5°. Dieser Bereich des Einsenkungswinkels hat sich als optimal additiv herstellbar und zugleich als Optimum zwischen einer zuverlässigen Vermeidung einer Balligkeit der Rippenstruktur und einem hinreichend großen Rippenflankenkontakt mit der weiteren Rippenstruktur des Kupplungsteils herausgestellt.

Gemäß einer Weiterbildung definiert die Rippenstruktur das maximale Rippenhöhenniveau zumindest beidseits des Rohrelements jeweils durch eine äußerste Endrippe und/oder durch mehrere Rippenenden. Dadurch ist die Rippenstruktur größtenteils so eingesenkt ausgebildet, dass, je nach strukturellem Aufbau der Rippen, die meisten Rippen und/oder die meisten Rippenanteile unterhalb des maximalen Rippenhöhenniveaus verlaufen. Mit anderen Worten ist die Rippenstruktur damit größtenteils entlang der zentralen Längsachse unter das Rippenhöhenniveau abgesenkt. Die äußerste Endrippe beziehungsweise die mehreren Rippenenden bilden folglich den bezüglich des Rohrelements äußersten und rohraxial bemessenen höchsten Rand der Rippenstruktur.

Gemäß einer Weiterbildung ist die Rippenstruktur in Blickrichtung entlang der zentralen Rohrlängsachse radial und/oder parallel strukturiert. "Und" bedeutet hierbei in "und/oder", dass die Rippenstruktur zu einem Teil radial und zum anderen linear strukturiert ist, wobei üblicherweise entweder eine radiale Strukturierung oder eine parallele Strukturierung realisiert ist. Wenn die Rippenstruktur in Blickrichtung entlang der zentralen Rohrlängsachse radial strukturiert ist, weist sie in Aufsicht Rippen auf, die sich radial von dem Rohrelement weg erstrecken, zum Beispiel mit linienförmigen oder flächenförmigen Rippengraten. Wenn die Rippenstruktur in Blickrichtung entlang der zentralen Rohrlängsachse parallel strukturiert ist, weist sie in der Aufsicht Rippen auf, die sich parallel zueinander erstrecken, zum Beispiel mit linienförmigen oder flächenförmigen Rippengraten.

Gemäß einer Weiterbildung ist die Rippenstruktur frei von mechanischen Bearbeitungsspuren ausgebildet. Die Rippenstruktur ist nach dieser Weiterbildung ohne eine Schleifbearbeitung und ohne eine Fräsbearbeitung hergestellt, insbesondere direkt additiv hergestellt ist.

Gemäß einer Weiterbildung erreicht das Rohrelement ein gegenüber dem maximalen Rippenhöhenniveau rohraxial bemessenes höheres Rohrhöhenniveau. Das Rohrelement überragt nach dieser Weiterbildung das maximale Rippenhöhenniveau und kann so besonders tief in eine weitere Kühlmittelkanalstruktur außerhalb des Werkzeugkopfs beim Kuppeln eingesteckt werden.

Gemäß einer Weiterbildung weist der Werkzeugkopf einen Halterteil auf, der mit dem Schneidhalterteil verbunden ist, von dem der Schneidhalterteil in Blickrichtung entlang der zentralen Rohrlängsachse absteht, und der eine Oberseite und eine Unterseite aufweist, zwischen denen in Blickrichtung entlang der zentralen Rohrlängsachse der Schneidhalterteil angeordnet ist, wobei der Halterteil die Kupplungsfläche aufweist, wobei die Rippenstruktur das maximale Rippenhöhenniveau zumindest aufseiten der Oberseite und der Unterseite definiert. Der Halterteil sorgt damit für eine besonders drehmomentstabile Halterung des Schneidhalterteils im gekuppelten Zustand. Die Rippen der Rippenstruktur erstrecken sich in Blickrichtung entlang der zentralen Rohrlängsachse, wenn die Rippenstruktur parallel strukturiert ist, üblicherweise parallel oder senkrecht zu einem Normalenvektor eines Oberflächenabschnitts der Oberseite.

Gemäß einer Weiterbildung sind der Schneidhalterteil, der Halterteil und das Rohrelement als monolithische Einheit ausgebildet. Das Rohrelement ist somit mit dem Halterteil irreversibel lösbar verbunden und stellt für eine fräsende oder schleifende Herstellung der Rippenstruktur ein Hindernis dar, das sich nicht reversibel entfernen lässt.

Gemäß einer Weiterbildung ist die Rippenstruktur durch mindestens eine sich entlang des Rohrelements erstreckende Ausnehmung zur Durchführung eines Schraubenelements unterbrochen. Der Werkzeugkopf lässt sich dadurch mittels Schrauben in einem gekuppelten Zustand reversibel lösbar fixieren, wobei sich die Kupplungsfläche kippstabil abstützen kann. Üblicherweise sind drei oder vier solcher Ausnehmungen ausgebildet.

Gemäß einer Weiterbildung weist der Schneidhalter ein von ihm aufgenommenes und darin gehaltenes Schneidelement auf. Der Werkzeugkopf ist damit direkt zum Stechen und/oder Drehen ausgebildet, indem das Schneidelement dementsprechend eine zum Stechen ausgebildete Schneidengeometrie hat, mit welcher üblicherweise unter einer relativen Drehung eines Bauteils zum Werkzeugkopf eine Nut erzeugt oder ein Bereich des Bauteils abgestochen wird. Das Schneidelement kann auch eine zum Drehen ausgebildete Schneidengeometrie haben, mit welcher üblicherweise unter einer relativen Drehung eines Bauteils zum Werkzeugkopf eine kreiszylindrische, kegelige oder geschwungene Bauteiloberfläche erzeugt wird oder das Bauteil durch ein Plandrehen verkürzt wird. In gewissen Grenzen kann der Werkzeugkopf auch zum Drehen verwendet werden, wenn das Schneidelement zum Stechen ausgebildet ist, und umgekehrt kann der Werkzeugkopf auch zum Stechen verwendet werden, wenn das Schneidelement zum Drehen ausgebildet ist. Der Fachmann erkennt an der Schneidengeometrie, ob das Schneidelement hauptsächlich und damit üblicherweise am besten zum Stechen oder zum Drehen geeignet ist. Analoges gilt für den Werkzeugkopf.

Gemäß einer Weiterbildung ist der Kühlmittelauslass zur Spanflächenkühlung ausgebildet. Der Kühlmittelauslass kann damit eine Spanfläche eines Schneidelements beziehungsweise des Schneidelements kühlen.

Die Aufgabe wird auch durch ein Herstellverfahren nach Anspruch 14 gelöst.

Das Herstellverfahren zur Herstellung eines Werkzeugkopfs für ein Stechwerkzeug und/oder ein Drehwerkzeug umfasst die Schritte: a) Bereitstellen eines metallischen Pulvers, b) schichtweises Aufschmelzen mit anschließendem schichtweisem Erstarren des metallischen Pulvers, sodass ein Werkzeugkopf nach einem der Ansprüche 1 bis 13, nach den offenbarten Weiterbildungen des Werkzeugkopfs und/oder nach den offenbarten Ausführungsformen aufgebaut wird. Bei dem so hergestellten Werkzeugkopf werden die für ihn beschriebenen Vorteile und Wirkungen analog realisiert.

Gemäß einer Weiterbildung des Verfahrens wird die durch Schritt b) hergestellte Rippenstruktur ohne mechanische Nachbearbeitung bereitgestellt. Indem die Rippenstruktur auf der Seite des Rohrelements durchgehend unterhalb des maximalen Höhenniveaus eingesenkt und so hergestellt ist, wird eine mechanische Nachbearbeitung nicht mehr benötigt, um den Werkzeugkopf präzise kuppeln zu können.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen
- Fig. 1:: eine perspektivische Darstellung eines Werkzeugkopfs für ein Drehwerkzeug nach einer ersten Ausführungsform;
- Fig. 2:: eine weitere perspektivische Darstellung des Werkzeugkopfs nach der ersten Ausführungsform;
- Fig. 3:: eine Darstellung in Draufsicht auf eine Kupplungsfläche des Werkzeugkopfs nach der ersten Ausführungsform;
- Fig. 4:: eine Schnittdarstellung des Werkzeugkopfs nach der ersten Ausführungsform bezüglich der in Fig. 3 gezeigten Schnittlinie A-A;
- Fig. 5: eine zu Fig. 4 analoge Schnittdarstellung eines Werkzeugkopfs nach einer zweiten Ausführungsform;
- Fig. 6:: eine zur Fig. 4 analoge Schnittdarstellung eines Werkzeugkopfs nach einer dritten Ausführungsform;
- Fig. 7:: eine perspektivische Darstellung eines Werkzeugkopfs für ein Drehwerkzeug nach einer vierten Ausführungsform;
- Fig. 8:: eine Darstellung in Draufsicht auf eine Kupplungsfläche des Werkzeugkopfs nach der vierten Ausführungsform;
- Fig. 9:: eine perspektivische Darstellung eines Werkzeugkopfs für ein Drehwerkzeug nach einer fünften Ausführungsform;
- Fig. 10:: eine Darstellung in Draufsicht auf eine Kupplungsfläche des Werkzeugkopfs nach der fünften Ausführungsform.

### Erste Ausführungsform

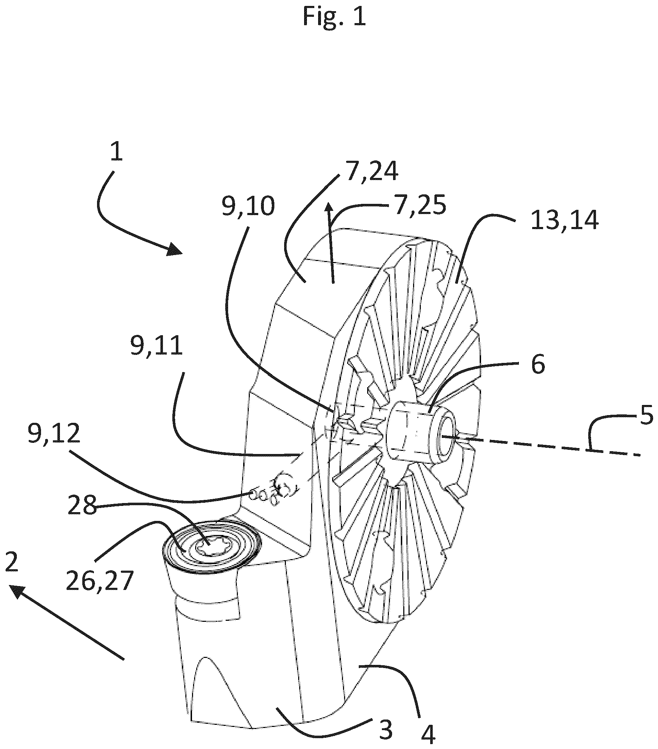

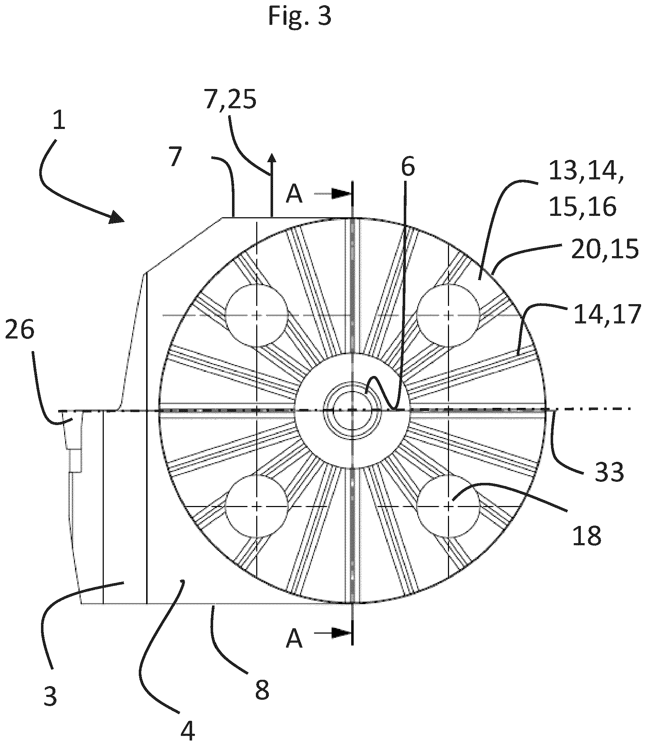

Fig. 1 bis Fig. 4 zeigen einen Werkzeugkopf 1 für ein Drehwerkzeug nach einer ersten Ausführungsform eines erfindungsgemäßen Werkzeugkopfs. Bestimmungsgemäß kann der Werkzeugkopf 1 am besten zum Runddrehen verwendet werden, indem der Werkzeugkopf 1 entlang einer Richtung 2 unter der Drehung eines Bauteils relativ zum Werkzeugkopf 1 zerspanend bewegt wird. Der Werkzeugkopf 1 weist einen Schneidhalterteil 3 und einen mit dem Schneidhalterteil 3 verbundenen Halterteil 4 auf. Der Schneidhalterteil 3 steht in Blickrichtung entlang einer zentralen Rohrlängsachse 5 eines Rohrelements 6 des Werkzeugkopfs 1 von dem Halterteil 4 ab. Der Halterteil 4 weist eine Oberseite 7 und eine Unterseite 8 auf. Wie zum Beispiel Fig. 3 zeigt, ist der Schneidhalterteil 3 in Blickrichtung entlang der zentralen Rohrlängsachse 5 zwischen der Oberseite 7 und der Unterseite 8 angeordnet. Der Halterteil 4 und damit der Werkzeugkopf 1 weisen eine Kühlmittelkanalstruktur 9 auf, die aus einem ersten Kanal 10, der längs der zentralen Rohrlängsachse 5 erstreckt und mit dem Rohrelement 6 fluidkommunizierend verbunden ist, einem zweiten Kanal 11, der quer zur zentralen Rohrlängsachse 5 erstreckt ist und von dem ersten Kanal 10 fluidkommunizierend abzweigt, und drei dritten, gegenüber dem zweiten Kanal 11 dünneren Kanälen 12, die von dem zweiten Kanal 11 fluidkommunizierend und auf den Schneidhalterteil 3 gerichtet aus dem Halterteil 4 austreten und so einen Kühlmittelauslass der Kühlmittelkanalstruktur 9 bilden, gebildet ist; von den dritten Kanälen 12 ist in Fig. 3 lediglich einer mit dem Bezugszeichen 12 versehen. Das Rohrelement 6 dient als Kühlmitteleinlass in die Kühlmittelkanalstruktur 9.

Der Halterteil 4 und damit der Werkzeugkopf 1 weisen eine Kupplungsfläche 13 auf. Das Rohrelement 6 ist bezüglich der Kupplungsfläche 13 zentral angeordnet und steht von der Kupplungsfläche 13 entlang der zentralen Rohrlängsachse 5 ab, sodass der Kühlmitteleinlass zentral im Bereich der Kupplungsfläche 13 ausgebildet ist. Die Kupplungsfläche 13 weist eine Rippenstruktur 14 auf, die exemplarisch in Blickrichtung entlang der zentralen Rohrlängsachse 5 radial strukturiert ist. Die Rippenstruktur 14 weist um das Rohrelement 6 umfänglich verteilt angeordnete Rippen 15 auf. Die Rippen 15 sind damit zumindest beidseits des Rohrelements 6 ausgebildet. Die Rippen 15 weisen jeweils einen dreieckförmigen und damit einen flächenförmigen Rippengrat 16 auf, der in radialer Richtung bezüglich der zentralen Rohrlängsachse 5 weg von der zentralen Rohrlängsachse 5 breiter wird. Die Rippenstruktur 14 kann damit im Sinne einer Hirthverzahnung mit einer korrespondierend strukturierten weiteren Rippenstruktur einer weiteren Kupplungsfläche in Eingriff gebracht werden, sodass der Werkzeugkopf 1 mit der weiteren Kupplungsfläche koppelbar ausgebildet ist. Indem die Rippenstruktur 14 und die korrespondierend ausgebildete Rippenstruktur, auf die der Fachmann aufgrund der Rippenstruktur 14 ohne Weiteres schließen kann, in Eingriff gebracht werden, wird der Schneidhalterteil 3 auf einer vorgegebenen Position und Lage fixiert und gegenüber dem beim Runddrehen auftretenden Drehmoment, verursacht durch die Schnittkräfte, gelagert.

Die Rippen 15 sind durch sich bezüglich der zentralen Rohrlängsachse 5 und damit bezüglich des Rohrelements 6 radial erstreckende Rillen 17 der Kupplungsfläche 13 zueinander paarweise beabstandet, wie Fig. 3 zum Beispiel zeigt; die Rippen 15 und die Rillen 17 sind in Umfangsrichtung bezüglich des Rohrelements 6 alternierend abwechselnd angeordnet.

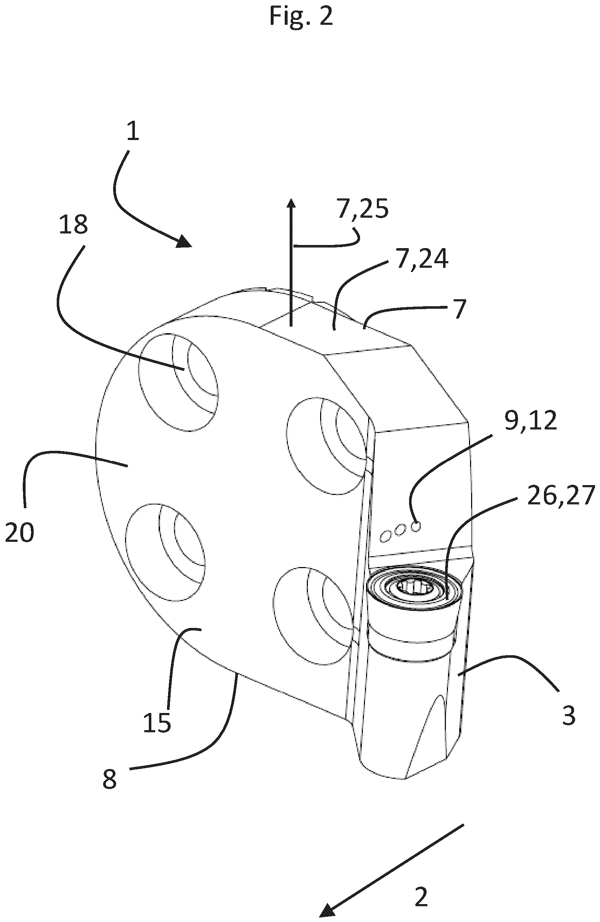

Die Rippenstruktur 14 wird durch vier sich bezüglich der zentralen Rohrlängsachse 5 rohraxial erstreckende Ausnehmungen 18, die zur Durchführung eines Schraubenelements ausgebildet sind, unterbrochen; in Fig. 2 und 3 ist jeweils nur eine der vier Ausnehmungen mit dem Bezugszeichen 18 versehen. Die Schraubenelemente sind aufseiten einer der Kupplungsfläche 14 gegenüberliegenden Außenfläche 20 des Werkzeugkopfs in und durch den Werkzeugkopf 1 durchsteckbar, indem die Ausnehmungen 18 die Außenfläche 20 unterbrechen, wie Fig. 2 zum Beispiel zeigt.

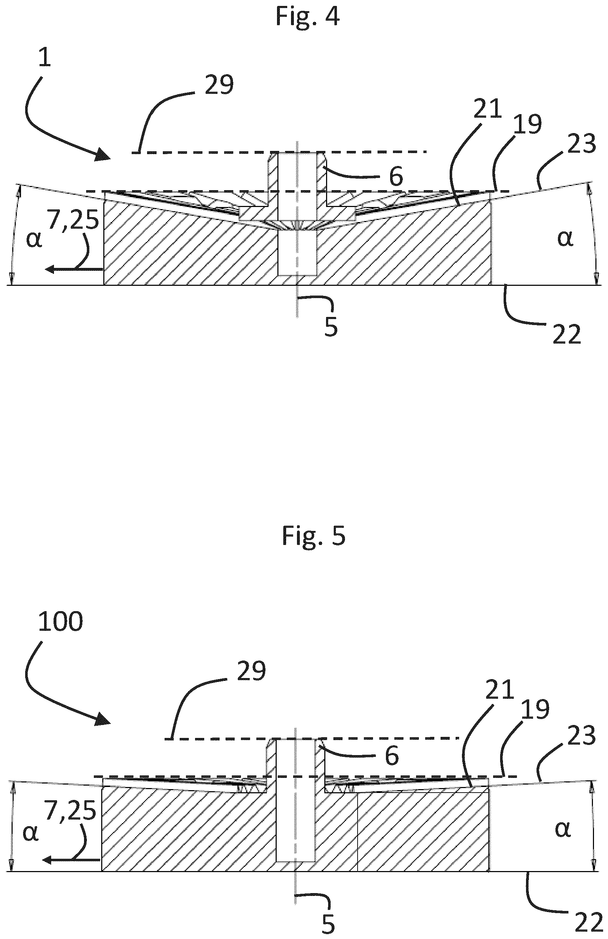

Die Querschnittdarstellung gemäß Fig. 4, die parallel zur zentralen Rohrlängsachse 5 orientiert ist und so den Werkzeugkopf 1 radial entlang und durch die bezüglich Fig. 3 auf 12 Uhr und 6 Uhr angeordneten Rillen 17 geschnitten darstellt, zeigt, dass die Rippenstruktur 14 beidseits des Rohrelements 6 ein rohraxial bemessenes insgesamt maximales Rippenhöhenniveau 19 der Rippenstruktur 14 definiert; das Rippenhöhenniveau 19 ist eine senkrecht zur zentralen Rohrlängsachse 5 angeordnete Ebene, an die die Rippenstruktur parallel zur zentralen Rohrlängsachse 5 insgesamt maximal heranreicht. In einer Zusammenschau von Fig. 3 und Fig. 4 wird deutlich, dass die radial äußersten und kreisförmigen Rippenenden 20 der Rippen 15 jeweils das Rippenhöhenniveau 19, also diese Ebene, tangieren. Dadurch wird das maximale Rippenhöhenniveau 19 auch aufseiten der Oberseite 7 und der Unterseite 8 definiert. Fig. 3 und Fig. 4 zeigen weiterhin in einer Zusammenschau, dass sich die Rippenstruktur 14 und damit die Rippen 15 ausgehend hiervon, also wo die Rippenenden 20 das maximale Rippenhöhenniveau 19 tangieren, in radialer Richtung auf das Rohrelement 6 durchgehend unter das maximale Rippenhöhenniveau 19 eingesenkt ausgebildet ist. An einer beliebigen Stelle innerhalb der Rippenenden 20 ist die Rippenstruktur 14 damit gegenüber dem maximalen Rippenhöhenniveau 19 tieferliegend ausgebildet. Die Rippenstruktur 14 ist gemäß Fig. 4 so eingesenkt ausgebildet, indem die Rippenstruktur 14 einem eingesenkten Bodenflächenanteil 21 der Kupplungsfläche 13 folgend ausgebildet ist; der Bodenflächenanteil 21 bildet zugleich die Bodenfläche der Rillen 17. Der Bodenflächenanteil 21 und damit die Rippenstruktur 14 und damit die Rippen 15 sind unter einem Einsenkungswinkel α von exemplarisch 10°, der im Bereich von 0,5° bis 15° liegt, eingesenkt ausgebildet, wie Fig. 4 zeigt. Der Einsenkungswinkel α wird in einem Querschnitt gemäß Fig. 4 zwischen einer senkrecht zur zentralen Rohrlängsachse 5 orientierten und dem Querschnitt gemäß Fig. 4 enthaltenen Bemessungslinie 22, die unterhalb der Kupplungsfläche 14 angeordnet ist, und einer Höhenkonturlinie 23 gemessen. Die Höhenkonturlinie 23 ist im Falle der Rippenstruktur 14, also einer radial strukturierten Rippenstruktur, eine Tangente zum Bodenflächenanteil, der sich in dem Querschnitt gemäß Fig. 4 durchgehend erstreckt. Im Falle der Höhenkonturlinie 23 könnte es genauso gut eine an die Rippengrate 16 angelegte Tangente sein, wobei der Einsenkungswinkel α unverändert bliebe.

Indem die Rippenstruktur 14 so, wie insbesondere Fig. 4 in Zusammenschau mit Fig. 3 deutlich macht, eingesenkt ausgebildet ist, übernehmen die Rippenenden 20 eine rohraxial bemessene Abstützfunktion zur kippstabilen Anlage der Rippenstruktur 14 an einer analog zum maximalen Rippenhöhenniveau 19 orientierten körperlichen Ebene, während die Rippenstruktur 14 aufseiten des Rohrelements 6 und damit innerhalb der Rippenenden 20 so eingesenkt ausgebildet ist, dass die Rippenstruktur 14 jedweden Kontakt mit der körperlichen Ebene vermeidet, aber zugleich für einen seitlichen Eingriff mit und an den Rippen einer korrespondierend strukturierten Rippenstruktur zwischen den Rippenenden 20 geeignet ist. Der Werkzeugkopf 1 kann folglich so gekuppelt werden, dass er beim Anziehen von durch die Ausnehmungen 18 eingesetzten Schrauben zum Verbinden mit einem Halter nicht verkippt.

Die Oberseite 7 weist einen üblichen ebenen Abschnitt 24 auf, dem ein Normalenvektor 25 zugeordnet ist, der senkrecht zur zentralen Rohrlängsachse 5 orientiert ist. Der Normalenvektor 25 kann im Sinne der vorliegenden Offenbarung zur Beschreibung und Definition der Rippenstruktur 14 zusammen mit der zentralen Rohrlängsachse 5 verwendet werden.

Der Halterteil 4 und das Rohrelement 6 bilden eine monolithische Einheit zusammen mit dem Schneidhalterteil 3. Das Rohrelement 6 kann folglich nicht reversibel, also nur zerstörend, vom Halter 4 und damit aus dem Bereich der Kupplungsfläche 13 entfernt werden.

Der Werkzeugkopf 1 weist ferner ein Schneidelement 26 zum Runddrehen mit einer Spanfläche 27 auf, auf die die dritten Kühlmittelkanäle 12 zur Kühlung der Spanfläche 27 gerichtet sind. Das Schneidelement 26 wird durch eine Schraube 28 reversibel lösbar in dem Schneidhalterteil 3 gehaltert.

Fig. 4 zeigt, dass das Rohrelement 6 ein gegenüber dem maximalen Rippenhöhenniveau 19 rohraxial bemessenes höheres Rohrhöhenniveau 29 erreicht. Das Rohrelement 6 ragt also entlang der zentralen Rohrlängsachse 5 aus dem Rippenhöhenniveau 19 aufseiten des Rohrelements 6 heraus.

Fig. 4 zeigt in Zusammenschau mit Fig. 3 ferner, dass die Rippenstruktur 14 eine konkav eingewölbte Grundform aufweist, die trichterförmig ist, und dass die Rippenstruktur 14 größtenteils, also bis auf die Rippenenden 20, unterhalb des maximalen Rippenhöhenniveaus 19 verläuft.

Der Werkzeugkopf 1 wurde im Bereich des Schneidhalterteils 3 und des Halterteils 4 und damit auch im Bereich der Kupplungsfläche 13 und der Rippenstruktur 14 additiv hergestellt. Die Rippenstruktur 14 ist frei von mechanischen Bearbeitungsspuren.

### Zweite Ausführungsform

Fig. 5 zeigt in einer zu Fig. 4 analogen Schnittdarstellung eine zweite Ausführungsform eines Werkzeugkopfs 100, der bis auf einen kleineren Einwölbungswinkel α von exemplarisch 3°, welcher im Bereich von 0,8° bis 5° liegt, dem Werkzeugkopf 1 analog aufgebaut ist. Insoweit werden daher identische Bezugszeichen verwendet. Der kleinere Einwölbungswinkel α von 3° erlaubt eine seitlich größere Überlappung mit den Rippen einer korrespondierenden Rippenstruktur.

### Dritte Ausführungsform

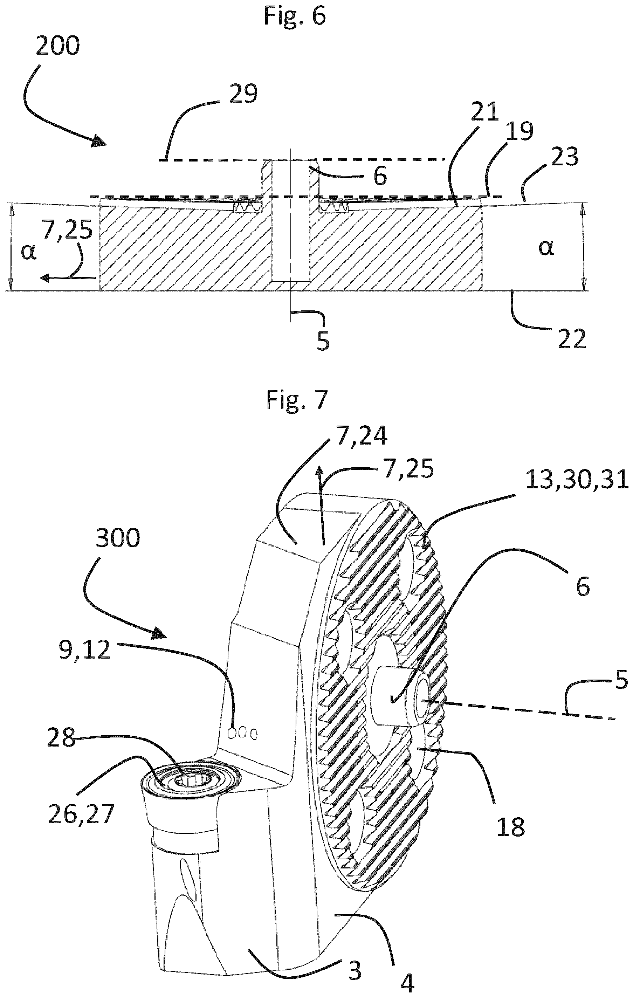

Fig. 6 zeigt in einer zu Fig. 4 analogen Schnittdarstellung eine dritte Ausführungsform eines Werkzeugkopfs 200, der bis auf einen kleineren Einwölbungswinkel α von exemplarisch 1,5°, welcher im Bereich von 0,8° bis 5° liegt, dem Werkzeugkopf 1 und dem Werkezugkopf 200 analog aufgebaut ist. Insoweit werden daher identische Bezugszeichen verwendet. Der noch kleinere Einwölbungswinkel α von 1,5° erlaubt eine seitlich noch größere Überlappung mit den Rippen einer korrespondierenden Rippenstruktur.

### Vierte Ausführungsform

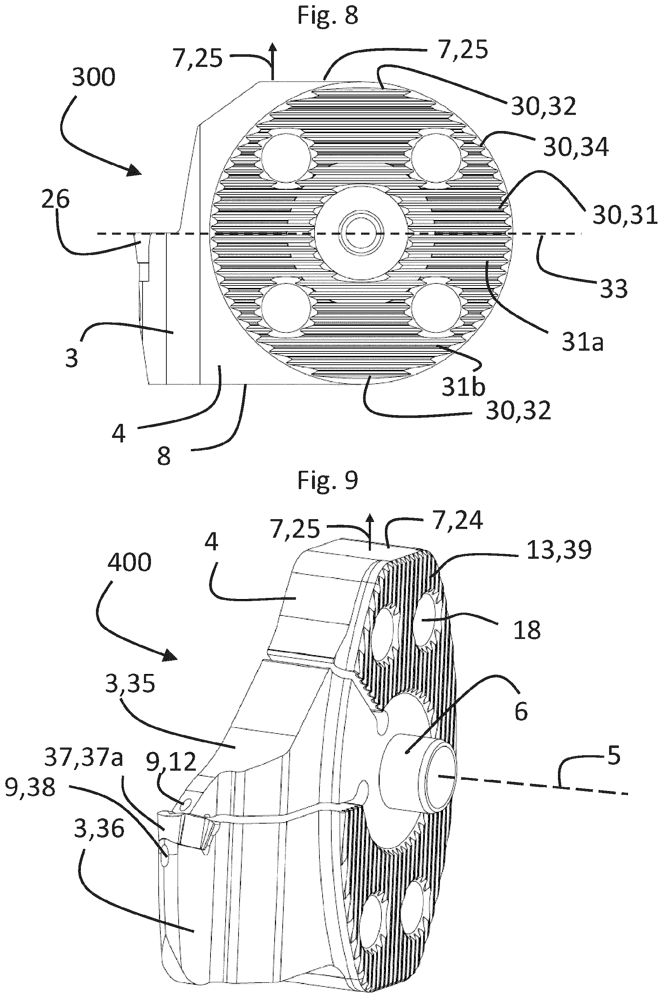

Fig. 7 und Fig. 8 zeigen eine vierte Ausführungsform eines Werkzeugkopfs 300, der dem Werkzeugkopf 1 bis auf eine anders strukturierte Rippenstruktur 30 analog aufgebaut ist. Fig. 7 ist analog zu Fig. 1 und Fig. 8 ist analog zu Fig. 3. Die Rippenstruktur 30 der Kupplungsfläche 13 des Werkzeugkops 300 ist im Unterschied zu der Rippenstruktur 14 der Kupplungsflache 13 des Werkzeugkopfs 1 in Blickrichtung entlang der zentralen Rohrlängsachse 5 parallel strukturiert, indem die Rippenstruktur 30 aus in dieser Blickrichtung parallel zueinander verlaufenden Rippen 31 gebildet ist, die sich beidseits des Rohrelements 6 und dieses umfänglich umgebend erstrecken. Die Rippenstruktur 30 hat aufseiten der Oberseite 7 und aufseiten der Unterseite 8 jeweils eine äußerste Endrippe 32. Die beiden äußersten Endrippen 32 erstrecken sich wie die übrigen Rippen 31 in Blickrichtung parallel zur zentralen Rohrlängsachse 5 und sind senkrecht zur zentralen Rohrlängsachse 5 und senkrecht zum Normalenvektor 25 ausgerichtet und definieren entlang ihrer Längserstreckung das maximale Rippenhöhenniveau 19 beidseits des Rohrelements 6, indem sie das maximale Rippenhöhenniveau 19 durchgehend tangieren. Ausgehend hiervon ist die Rippenstruktur 30 in Richtung auf eine Querachse 33 des Rohrelements 6 durchgehend unter das maximale Rippenhöhenniveau 19 eingesenkt ausgebildet. Die Rippenstruktur 30 hat damit eine sich entlang der Querachse 33, die senkrecht zur zentralen Rohrlängsachse 5 und diese schneidend ausgerichtet ist, erstreckende rinnenförmige Grundform. Die zwischen den äußersten Endrippen 32 gelegenen Rippenenden 34, rechts außen und links außen bezüglich Fig. 8, der Rippen 31 sind damit durchgehend unter das maximalen Rippenhöhenniveaus 19 eingesenkt ausgebildet. Der Einwölbungswinkel α wird in einem analog zu Fig. 4 orientierten Querschnitt, der damit senkrecht zur Querachse 33 orientiert ist, gemessen, indem die Höhenkonturlinie 23 die Rippengrate 31a der Rippen 31 und Rippen 32, die in Blickrichtung entlang der zentralen Rohrlängsachse 5 linienförmig ausgebildet sind, oder ergebnisgleich die im Querschnitt zwischen den so angeschnittenen Rippen 31 und 32 sich erstreckenden Bodenflächenanteile 31b der Kupplungsfläche 14 auf jeder Seite des Rohrelements 6 in Form einer durchgehenden Tangente verbindet und der Winkel zwischen der so konstruierten Höhenkonturlinie 23 und der Bemessungslinie 22 gemessen wird.

### Fünfte Ausführungsform

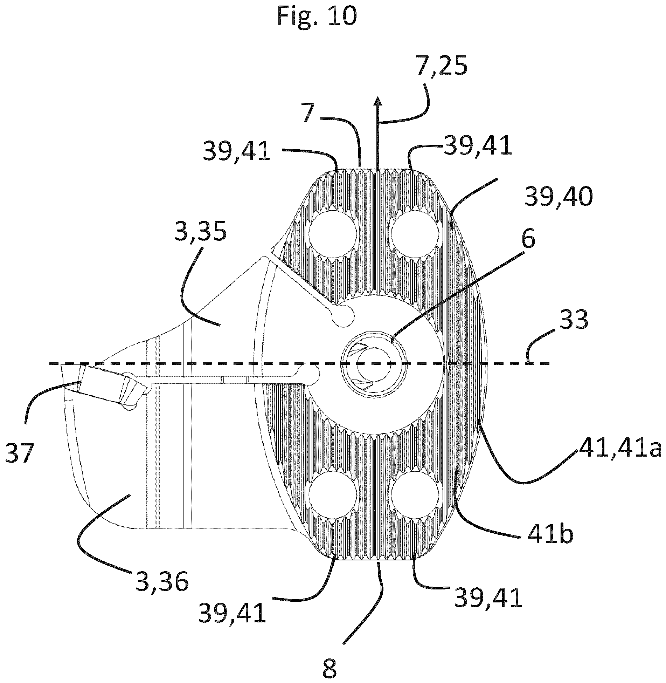

Fig. 9 und Fig. 10 zeigen eine fünfte Ausführungsform eines Werkzeugkopfs 400, der dem Werkzeugkopf 1 bis auf eine anders strukturierte Rippenstruktur 30 und eine Ausbildung zum Stechen analog ausgebildet ist. Fig. 9 ist analog zu Fig. 1 und Fig. 10 analog zu Fig. 3. Der Werkzeugkopf 400 ist zum Stechen ausgebildet, indem der Schneidhalterteil 3 einen oberen Klemmabschnitt 35 und einen unteren Auflageabschnitt 36 aufweist, zwischen denen ein zum Stechen ausgebildetes Schneidelement 37 eingeklemmt gehalten ist. Die Kühlmittelkanalstruktur 9 ist gegenüber der des Werkzeugkopfs 1 insoweit anders ausgebildet, als dass sie einen zusätzlichen Kühlmittelauslass 38 zur Kühlmittelversorgung einer Freifläche 38a des Schneidelements 37 und einen einkanaligen Kühlmittelauslass 12 aufweist.

Die Rippenstruktur 39 der Kupplungsfläche 13 des Werkzeugkopfs 400 ist analog zu der Rippenstruktur 30 der Kupplungsfläche 13 des Werkzeugkopfs 300 in Richtung auf die Querachse 33 durchgehend eingesenkt ausgebildet, wobei die Rippen 40 der Rippenstruktur 39 hingegen in Blickrichtung entlang der zentralen Rohrlängsachse 5 parallel zum Normalenvektor 25 ausgerichtet sind, also sich von der Oberseite 7 zur Unterseite 8 längs erstrecken. Sie definieren das maximale Rippenhöhenniveau 19 auf der Oberseite 7 und der Unterseite 8 jeweils durch und entlang von mehreren so gelegenen äußersten Rippenenden 41 der Rippen 40, indem die äußersten Rippenenden 41 das maximale Rippenhöhenniveau 19 tangieren. Die Rippenstruktur 39 hat damit eine der Rippenstruktur 30 analoge rinnenförmige Grundform, wobei sie jedoch durch den oberen Klemmabschnitt 35 unterbrochen wird.

Der Einwölbungswinkel α wird in einem analog zu Fig. 4 orientierten Querschnitt, der damit senkrecht zur Querachse 33 orientiert ist, gemessen, indem die Höhenkonturlinie 23 die Rippengrate 41a der Rippen 31, die in Blickrichtung entlang der zentralen Rohrlängsachse 5 linienförmig ausgebildet sind, oder ergebnisgleich die im Querschnitt zwischen den Rippen 40 sich erstreckenden Bodenflächenanteile 41b der Kupplungsfläche 14 auf jeder Seite des Rohrelements 6 in Form einer durchgehenden Tangente tangiert und der Winkel zwischen der so konstruierten Höhenkonturlinie 23 und der Bemessungslinie 22 gemessen wird.

Die Werkzeugköpfe 1, 100, 200, 300 und 400 sind durch ein additives Herstellverfahren hergestellt. Das additive Herstellverfahren umfasst die Schritte: a) Bereitstellen eines metallischen Pulvers, b) schichtweises Aufschmelzen mit anschließendem schichtweisem Erstarren des metallischen Pulvers, sodass einer der Werkzeugköpfe 1, 100, 200, 300 und 400 additiv aufgebaut wird.

Die vorliegende Erfindung ist nicht auf die Werkzeugköpfe 1, 100, 200, 300 und 400 beschränkt, insbesondere nicht auf einen konkreten Einwölbungswinkel α im Bereich von 0,5° bis 15° und/oder auf konstruktive Details der Werkzeugköpfe 1, 100, 200, 300 und 400. Letztere wählt der Fachmann so, dass der entsprechende Aufbau eines der Werkzeugköpfe 1, 100, 200, 300 und 400 den spezifischen Anforderungen des Drehens und/oder Stechens entspricht. Vielmehr ist es für den Fachmann entscheidend, dass die Rippenstrukturen 14, 30 und 39 wie offenbart in Richtung auf das Rohrelement 6 oder die Querachse 33 durchgehend unter das Rippenhöhenniveau 19 eingesenkt ausgebildet sind, wobei der Fachmann die Ausrichtung und Dimensionierung der Rippen 15, 30 und 39 so wählt, dass sie das Schneidelement 26 beziehungsweise 37 im gekuppelten Zustand auf einer vorgegebenen Drehposition beziehungsweis einer vorgegebenen Stechposition, üblicherweise auf Höhe der Querachse 31, stabil im gekuppelten Zustand halten.

## Patentansprüche

1. Werkzeugkopf (1, 100, 200, 300, 400) für ein Stechwerkzeug und/oder ein Drehwerkzeug, aufweisend einen Schneidhalterteil (3), eine Kühlmittelkanalstruktur (9) mit einem dem Schneidhalterteil (3) zugeordneten Kühlmittelauslass (12, 36), eine Kupplungsfläche (13) und ein von der Kupplungsfläche (13) entlang einer zentralen Rohrlängsachse (5) abstehendes Rohrelement (6) zum Kühlmitteleinlass in die Kühlmittelkanalstruktur (9), wobei die Kupplungsfläche (13) eine Rippenstruktur (14, 30, 38) aufweist, die zumindest beidseits des Rohrelements (6) ein rohraxial bemessenes und insgesamt maximales Rippenhöhenniveau (19) der Rippenstruktur (14, 30, 38) definiert und sich ausgehend hiervon in Richtung auf das Rohrelement (6) oder auf eine Querachse (31) des Rohrelements (6) erstreckt und dabei durchgehend unter das maximale Rippenhöhenniveau (19) eingesenkt ausgebildet ist.

2. Werkzeugkopf (1, 100, 200, 300, 400) nach Anspruch 1, wobei die Rippenstruktur (14, 30, 38) so eingesenkt ausgebildet ist, indem sie einem eingesenkten Bodenflächenanteil (21, 31b, 41b) der Kupplungsfläche (13) folgend ausgebildet ist.

3. Werkzeugkopf (1, 100, 200, 300, 400) nach Anspruch 1 oder 2, wobei die Rippenstruktur (14, 30, 38) beziehungsweise der Bodenflächenanteil (21, 31b, 41b) unter einem Einsenkungswinkel (α) im Bereich von 0,5° bis 15° so eingesenkt ausgebildet ist, wobei der Einsenkungswinkel (α) in einem parallel zur Rohrlängsachse (5) angeordneten Querschnitt zwischen einer zur zentralen Rohrlängsachse (5) senkrechten und unterhalb der Kupplungsfläche (13) angeordneten Bemessungslinie (22) und einer Höhenkonturlinie (23) der Rippenstruktur (14, 30, 38) beziehungsweise des Bodenflächenanteils (21, 31b, 41b) auf derselben Seite des Rohrelements (6) bemessen ist.

4. Werkzeugkopf (1, 100, 200, 300, 400) nach Anspruch 3, wobei der Einsenkungswinkel (α) im Bereich von 0,8° bis 5° liegt.

5. Werkzeugkopf (1, 100, 200, 300, 400) nach einem der vorhergehenden Ansprüche, wobei die Rippenstruktur (14, 30, 38) das maximale Rippenhöhenniveau (19) zumindest beidseits des Rohrelements (6) jeweils durch eine äußerste Endrippe (32) und/oder durch mehrere Rippenenden (20, 41) definiert.

6. Werkzeugkopf (1, 100, 200, 300, 400) nach einem der vorhergehenden Ansprüche, wobei die Rippenstruktur (14, 30, 38) in Blickrichtung entlang der zentralen Rohrlängsachse (5) radial und/oder parallel strukturiert ist.

7. Werkzeugkopf (1, 100, 200, 300, 400) nach einem der vorhergehenden Ansprüche, wobei die Rippenstruktur (14, 30, 38) frei von mechanischen Bearbeitungsspuren ausgebildet ist.

8. Werkzeugkopf (1, 100, 200, 300, 400) nach einem der vorhergehenden Ansprüche, wobei das Rohrelement (6) ein gegenüber dem maximalen Rippenhöhenniveau (19) rohraxial bemessenes höheres Rohrhöhenniveau (29) erreicht.

9. Werkzeugkopf (1, 100, 200, 300, 400) nach einem der vorhergehenden Ansprüche, wobei der Werkzeugkopf (1, 100, 200, 300, 400) einen Halterteil (4) aufweist, der mit dem Schneidhalterteil (3) verbunden ist, von dem der Schneidhalterteil (3) in Blickrichtung entlang der zentralen Rohrlängsachse (5) absteht, und der eine Oberseite (7) und eine Unterseite (8) aufweist, zwischen denen in Blickrichtung entlang der zentralen Rohrlängsachse (5) der Schneidteil (3) angeordnet ist, wobei der Halterteil (4) die Kupplungsfläche (13) aufweist, wobei die Rippenstruktur (14, 30, 38) das maximale Rippenhöhenniveau (19) zumindest aufseiten der Oberseite (7) und der Unterseite (8) definiert.

10. Werkzeugkopf (1, 100, 200, 300, 400) nach Anspruch 9, wobei der Schneidhalterteil, der Halterteil und das Rohrelement (6) als monolithische Einheit ausgebildet sind.

11. Werkzeugkopf (1, 100, 200, 300, 400) nach einem der vorhergehenden Ansprüche, wobei die Rippenstruktur (14, 30, 38) durch mindestens eine sich entlang des Rohrelements (5) erstreckende Ausnehmung (18) zur Durchführung eines Schraubenelements unterbrochen ist.

12. Werkzeugkopf (1, 100, 200, 300, 400) nach einem der vorhergehenden Ansprüche, wobei der Schneidhalter (3) ein von ihm aufgenommenes und darin gehaltertes Schneidelement (26, 37) aufweist.

13. Werkzeugkopf (1, 100, 200, 300, 400) nach einem der vorhergehenden Ansprüche, wobei der Kühlmittelauslass (12) zur Spanflächenkühlung ausgebildet ist.

14. Herstellverfahren zur Herstellung eines Werkzeugkopfs (1, 100, 200, 300, 400) für ein Stechwerkzeug und/oder ein Drehwerkzeug, umfassend die Schritte:
a) Bereitstellen eines metallischen Pulvers,
b) schichtweises Aufschmelzen mit anschließendem schichtweisem Erstarren des metallischen Pulvers, so dass ein Werkzeugkopf (1, 100, 200, 300, 400) nach einem der Ansprüche 1 bis 13 aufgebaut wird.

15. Herstellverfahren nach Anspruch 14, wobei die durch Schritt b) hergestellte Rippenstruktur (14, 30, 38) ohne mechanische Nachbearbeitung bereitgestellt wird.
